# EUROPÄISCHE PATENTSCHRIFT

(11) **EP 0 870 426 B1**
(45) Veröffentlichungstag und Bekanntmachung des Hinweises auf die Patenterteilung: **19.02.2003**
(21) Anmeldenummer: 98104206.2
(22) Anmeldetag: 10.03.1998
(51) Int. Cl.: A01G 5/04, A01G 31/00

(54) **Tragteil für erdelose Pflanzkulturen und Verfahren zu dessen Herstellung**
Holding element for soilless cultures and process for making it
Support pour cultures sans sol et procédé pour sa fabrication

(30) Priorität: 13.03.1997 DE 19710323
(43) Veröffentlichungstag der Anmeldung: 14.10.1998
(73) Patentinhaber: Böhringer, Eberhard, 27211 Bassum (DE)
(72) Erfinder: Böhringer, Eberhard, 27211 Bassum (DE)
(74) Vertreter: Busse & Busse Patentanwälte

(56) Entgegenhaltungen:
- DE-A- 3 805 614
- DE-A- 19 504 167
- DE-A- 19 516 572
- DE-U- 9 015 051
- DE-U- 9 015 278
- US-A- 3 958 365

## Beschreibung

Die Erfindung bezieht sich auf ein Tragteil für erdelose Pflanzkulturen gemäß dem Oberbegriff des Anspruches 1 sowie auf ein Verfahren zur Herstellung des Tragteils gemäß dem Oberbegriff des Anspruches 7.

Bei bekannten Tragteilen für erdelose Pflanzkulturen (G 90 15 278.6, US-3 958 365-A) werden zur Herstellung Kokosfasern verwendet, die in einer dem Tragteil entsprechende Aufnahmeform eingeschichtet, dabei mit einer als Verbindungsmittel vorgesehenen Latexdispersion besprüht und anschließend in dieser Aufnahmeform erwärmt und verfestigt werden, so daß über eine Aushärtung der Latexdispersion die Kokosfasern verbunden sind und danach der Tragkörper als Einzelteil aus der Aufnahmeform entnommen werden kann. Ein derartiges Herstellungsverfahren ist technisch aufwendig und für hohe Stückzahlen wenig geeignet, wobei die eine nachteilig geringe Festigkeit aufweisenden Tragteile zu deren Aussteifung zusätzliche Befestigungsmittel erfordern.

Der Erfindung liegt die Aufgabe zugrunde, ein Tragteil für erdelose Pflanzkulturen und ein Verfahren zu dessen Herstellung zu schaffen, das mit geringem apparativem und verfahrenstechnischem Aufwand eine produktive Herstellung von verschieden konturierten und optisch ansprechenden Tragteilen ermöglicht, deren dichte Faserstruktur bei elastischer Verformbarkeit eine verbesserte Formstabilität aufweist und zur sicheren Aufnahme unterschiedlicher Steckteile geeignet ist.

Die Erfindung löst diese Aufgabe durch ein Tragteil gemäß dem Anspruch 1 sowie ein Verfahren zu dessen Herstellung gemäß Anspruch 7. Hinsichtlich wesentlicher weiterer Ausgestaltungen wird auf die Ansprüche 2 bis 6 bzw. 8 bis 10 verwiesen.

Die Erfindung schafft auf besonders einfache und kostengünstige Weise die Möglichkeit, ohne zusätzliche Befestigungsmittel wie Verbindungsdraht, Garn oder dgl. das nur aus Kokosfasern und Latex bestehende Tragteil formstabil so auszubilden, daß die kompakte Faserstruktur des Tragteils bei weitgehend beliebiger Konturform eine hinreichende Stabilität und Elastizität aufweist, damit das Tragteil insbesondere zur Aufnahme von Pflanzkulturen, Gestecken oder dgl. besser geeignet ist und bei vollständiger Verrottbarkeit das einstückige Kokosvlies-Tragteil für eine Vielzahl von Verwendungszwecken im Grünen Bereich einsetzbar ist.

Das Tragteil ist als ein aus zwei Kokosvlies-Lagen doppellagig verpreßter Formkörper vorgesehen, über dessen umfangsseitigen Aussteifungsrand die beiden Kokosvlies-Lagen zu einer funktionalen Einheit so verbunden sind, daß das Tragteil oberseitig im Bereich zumindest einer der Vlieslagen eine konturformend straffe Hüllstruktur aufweist, die im Inneren des Formkörpers befindlichen Vlieslagen-Schichten dem Tragteil elastische Eigenschaften vermitteln und die untere Vlieslage einen bodenseitigen Bereich mit verdichtetem Kokosfaser-Latex-Verbund bildet.

In herstellungstechnisch vorteilhafter Ausführung werden jeweils als Halbzeug mit unterschiedlichem Latex- und/oder Faseranteil gefertigte Kokosvlies-Lagen verwendet, die in einem kontinuierlichen Produktionsdurchlauf so in Übereinanderlage verbracht werden, daß danach das Tragteil in einem Arbeitsschritt ausgestanzt werden kann. Bei diesem Ausstanzvorgang wird unmittelbar der konturbildende Aussteifungsrand des Tragteils als eine Haftungsstruktur zwischen im Ausstanzungsbereich verpreßten Kokosfasern und Latexanteilen gebildet, wobei über die Pressung beim Ausstanzen des Tragteils gleichzeitig die Verbindungsdichte der inneren Faserlagen des Tragteils so beeinflußt ist, daß der Formkörper bei kompaktem Verbund insgesamt elastisch ist.

Dieser Formgebungsvorgang des Tragteils mittels des Stanzverfahrens ist außerordentlich präzise ausführbar, zusätzliche Arbeitsgänge sind entbehrlich und die bei dem Ausstanzvorgang über die Druckkräfte erreichte Verdichtung der Kokosvlies-Lagen bewirkt gleichzeitig eine die Verbindungsstabilität der in den Faserstrukturen verteilten Latexbestandteile verbessernde Aushärtung jeweiliger Verklebungsbereiche, so daß das Tragteil ohne zusätzliche Nacharbeiten nach dem Ausstanzvorgang unmittelbar als ein kompakter und eine optisch ansprechende Gestalt aufweisender Formkörper bereitgestellt wird.

Weitere Einzelheiten und Vorteile der Erfindung ergeben sich aus der nachfolgenden Beschreibung und der Zeichnung, die mehrere Ausführungsformen des Tragteiles und eine Prinzipdarstellung eines Verfahrens zu dessen Herstellung veranschaulicht. In der Zeichnung zeigen:
- Fig. 1: eine Draufsicht auf ein erfindungsgemäß ausgebildetes Tragteil,
- Fig. 2: eine Schnittdarstellung gemäß einer Linie II - II in Fig. 1,
- Fig. 3 und Fig. 4: jeweilige Ausführungsformen des Tragteiles mit unterschiedlichen Konturformen,
- Fig. 5: eine Prinzipdarstellung von zwei in Bearbeitungslage in eine Stanzvorrichtung überführten Kokosvlies-Lagen, und
- Fig. 6: eine Schnittdarstellung gemäß einer Linie VI - VI in Fig. 5 mit einem Stanzwerkzeug in einer unteren Hubendstellung beim Ausstanzvorgang des Tragteils.

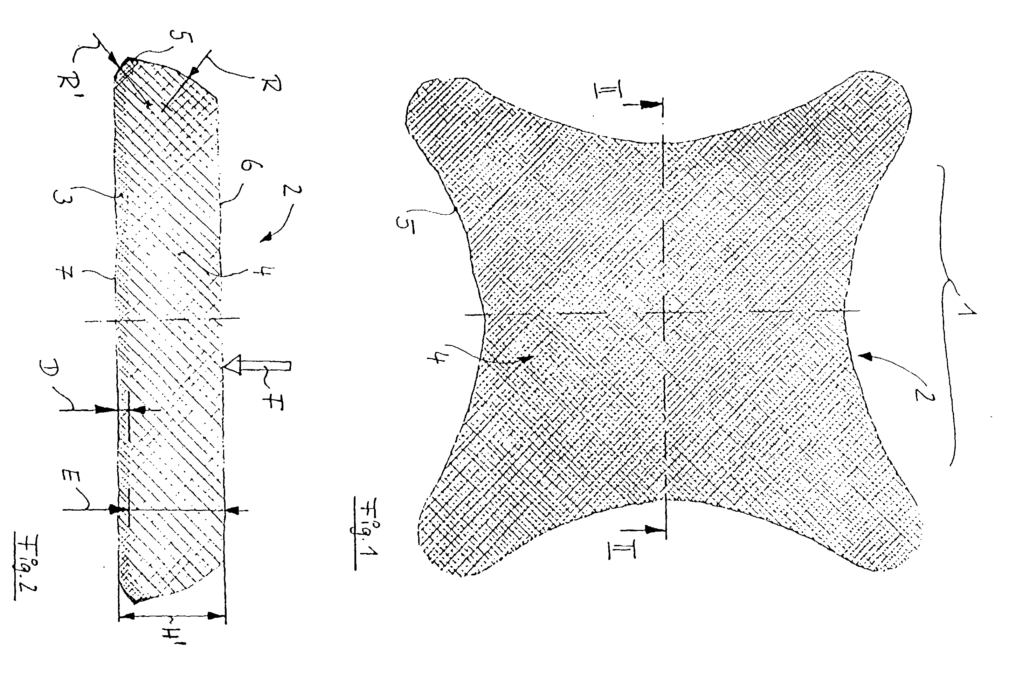

In Fig. 1 ist ein insgesamt mit 1 bezeichnetes Tragteil dargestellt, das als Unterlage für erdelose Pflanzkulturen, Gestecke oder dgl. vorgesehen ist. Das Tragteil 1 besteht aus einem durch Latex verbundene Kokosfasern aufweisenden Kokosvlies, so daß damit ein vollständig verrottbares Produkt aus natürlichen Rohstoffen bereitgestellt wird.

Das erfindungsgemäße Tragteil 1 ist als ein Formkörper 2 ausgebildet, der aus zumindest zwei zu einem Faserverbund vereinigten Kokosvlies-Lagen 3, 4 besteht, die in ihrem Verbindungseingriff über einen in Richtung der Umfangskontur des Formkörpers 2 verlaufenden Aussteifungsrand 5 fixiert sind. Dieser Aussteifungsrand 5 weist eine weitgehend ausgehärtete Haftungsstruktur aus verdichteten Latex- und Faserbestandteilen der beiden Kokosvlies-Lagen 3, 4 auf, wobei der Formkörper 2 ausgehend von seinem Aussteifungsrand 5 zumindest zur Formkörperoberseite 6 hin eine konvexe Querschnittsform (Radius R) darbietet (Fig. 2).

Die obere Kokosvlies-Lage 4 ist dabei nach Art einer Abdecklage zum Aussteifungsrand 5 hin verspannt und im inneren Bereich des Formkörpers 2 ist der Kokosfaser-Latex-Verbund so vorgespannt, daß der Formkörper 2 insgesamt eine Oberfläche mit elastischen Eigenschaften aufweist und die Kokosvlies-Lagen unter Einwirkung einer Druckbelastung (Pfeil F, Fig. 2) in die dargestellte Kontur zurückfedern.

Die Querschnittsdarstellung gemäß Fig. 2 verdeutlicht, daß der Formkörper 2 ausgehend von seinem Aussteifungsrand 5 eine zur Oberseite 6 und zur Unterseite 7 hin konvexe Oberflächenkontur (Radius R und R') aufweist. Die beiden Kokosvlies-Lagen 3, 4 sind mit unterschiedlich dichten Faserstrukturen (dargestellt durch eine unterschiedliche Liniendichte) versehen, wobei diese Lagen 3 und 4 jeweils über unterschiedliche Volumen- bzw. Gewichtsanteile von Latex- und/oder Kokosfasern eine unterschiedliche Materialdichte aufweisen können. Die in Gebrauchsstellung des Formkörpers 2 untere Kokosvlies-Lage 3 weist dabei in zweckmäßiger Ausführung eine gegenüber der oberen Kokosvlies-Lage 4 höhere Materialdichte auf und die beiden Lagen 3 und 4 sind jeweils mit unterschiedlicher Dicke D und E bemessen. Ebenso ist denkbar, über der unteren Kokosvlies-Lage 3 mehr als nur die eine dargestellte Kokosvlies-Lage 4 vorzusehen (nicht dargestellt).

Mit diesem Querschnittsaufbau gemäß Fig. 2 ist der Formkörper 2 im Bereich seiner oberen, eine weitgehend offenporige Struktur bildenden Verbund-Lage 4 leicht durchstechbar, so daß ein Gesteckteil oder dgl. in den inneren Bereich des Formkörpers 2 leicht einführbar ist und an den Teilen der Faserstruktur hinreichend fest verankert werden kann. Diese Verankerung des Gesteckteils (nicht dargestellt) ist bei dessen Verlagerung bis in die untere Lage 3 besonders zugstabil.

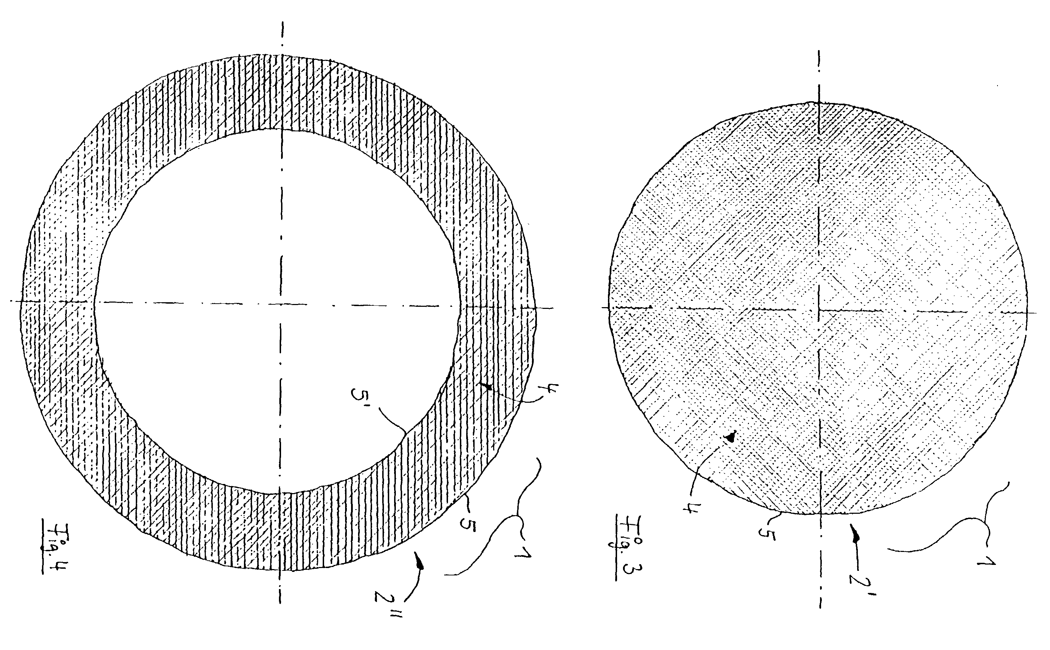

In Fig. 3 ist der Formkörper 2' mit einer scheibenförmigen Umfangskontur dargestellt und die Ausführungsform gemäß Fig. 4 zeigt den Formkörper 2'' als einen Ringkörper mit einem äußeren Aussteifungsrand 5 und einem inneren Aussteifungsrand 5'; wobei diese Formkörper 2', 2'' im Querschnitt ebenfalls zweilagig ausgebildet sind.

Die untere Kokosvlies-Lage 3 kann für die Aufnahme einer insbesondere lebenden Pflanzenkultur auf der Oberseite 6 des Formkörpers 2 als eine Flüssigkeits-Reserveschicht vorgesehen werden, in deren dichter Porenstruktur Wasser zeitweise speicherbar ist. Ebenso denkbar ist, in diese Kokosvlies-Lage 3 eine Nährlösung und/oder Mineralstoffe einzubringen oder den Formkörper 2 insgesamt zur Abdeckung einer Betonfläche vorzusehen und auf dieser eine erdelose Pflanzkultur mittels des Formkörpers 2 festzulegen.

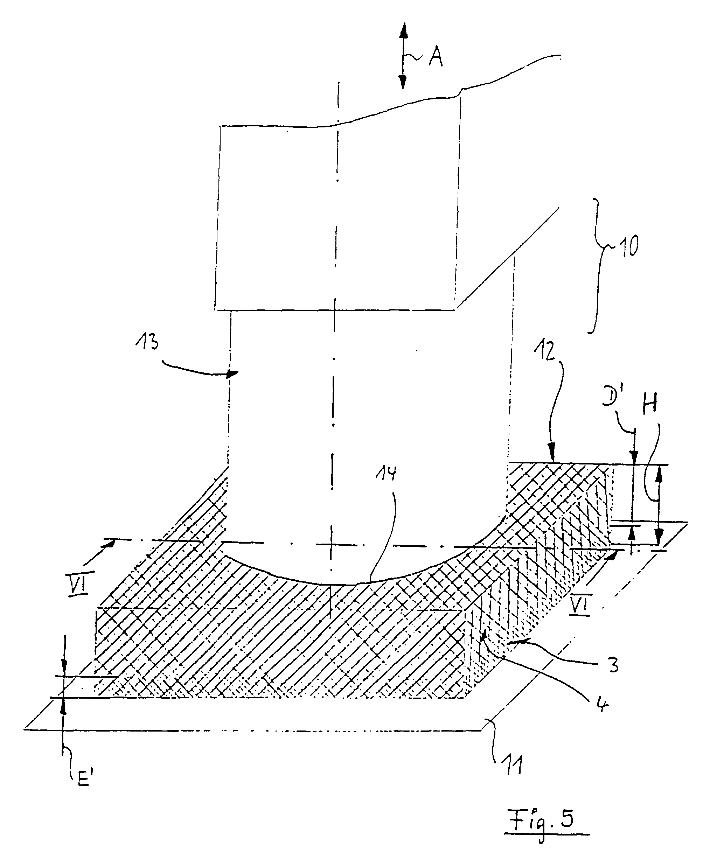

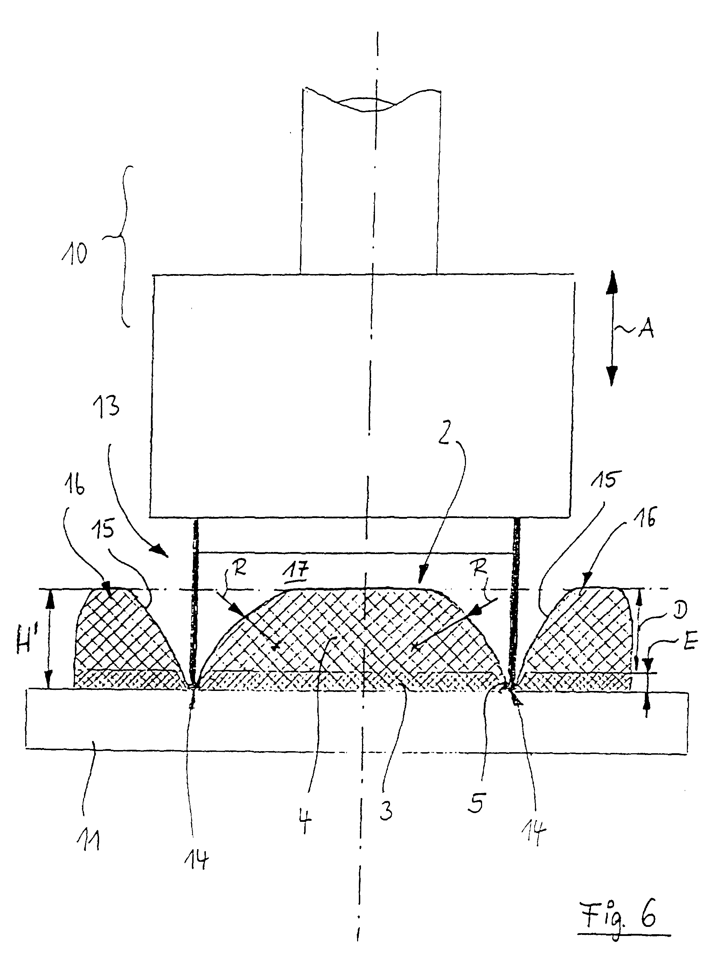

In Fig. 5 ist in einer Perspektivdarstellung eine insgesamt mit 10 bezeichnete Vorrichtung zur Herstellung eines der Formkörper 2, 2', 2'' dargestellt. Auf einer Grundplatte 11 sind die beiden in Übereinanderlage befindlichen und ein Mattenteil 12 als Halbzeug bildenden Kokosvlies-Lagen 3, 4 so positioniert, daß bei Bewegung (Pfeil A) eines Stanzwerkzeuges 13 zur Grundplatte 11 hin eine Preßkraft auf die Kokosvlies-Lagen 3, 4 bzw. einen Konturbereich des Mattenteils 12 eingeleitet wird. Am Ende der Absenkbewegung wird im Bereich eines Stanzmessers 14 (Fig. 6) ein Schneidvorgang wirksam und der Formkörper 2 in einem einzigen Arbeitsschritt aus dem Mattenteil 12 herausgetrennt.

Während dieses Ausstanzens des Formkörpers 2 aus der Kokosvlies-Matte 12 wird im Bereich des Stanzmessers 14 einerseits eine Trennfläche 15 zu einem jeweiligen Matten-Restteil 12' hin gebildet und innenseitig am Stanzmesser 14 werden die Kokosfaser- und Latexteile zu dem Aussteifungsrand 5 verfestigt. Bei diesem Stanzvorgang sind beispielsweise Druckkräfte von 250 KN wirksam und die Kokosvlies-Lagen weisen in zweckmäßiger Ausführung jeweils ein Gewicht von 540 G/m² auf, wobei die untere Kokosvlies-Lage 3 als das Halbzeug über einen Preßvorgang vorverdichtet ist und diese Lage 3 bei gleichem Flächengewicht eine geringere Ausgangshöhe E' aufweist.

Die Darstellung gemäß Fig. 6 verdeutlicht, daß das Stanzwerkzeug 13 mit einem inneren Hohlraum 17 ausgebildet ist, so daß der Formkörper 2 nur im unmittelbaren Bereich des in der Umfangskontur verlaufenden Stanzmessers 14 bei dessen erster Bewegungsphase eine Straffung (Einschnürung) zum Randbereich hin erfährt und die obere Kokosvlies-Lage 4 weitgehend ohne zusätzliche Pressung durch Anlage an der Innenseite 18 des Stanzwerkzeuges 10 zum Rand hin gespannt wird.

Im Bereich der Schneidkante des Stanzmessers 14 erfolgt bei dieser Straffung der Lage 4 gleichzeitig eine Pressung und Aushärtung der Latex-Kokosfaser-Mischung, derart, daß die Faserteile entlang der Trennlinie über eine Verklebung fixiert werden, danach der Trennschnitt (Bewegungsphase gemäß Fig. 6) erfolgt und der Formkörper 2 nach diesem Ausstanzvorgang die in Fig. 2 dargestellte Querschnitts-Kontur als bleibende Formgebung aufweist.

Die Ausgangshöhe H = D' + E' des Mattenteils 12 gemäß Fig. 5 ist nach diesem Stanz- und Formgebungsverfahren auf die Endhöhe H' des Formkörpers 2 reduziert. Das Mattenteil 12 weist zu Beginn des Ausstanzvorgangs (Fig. 5) beispielsweise eine Höhe H von 100 bis 150 mm auf und am Ende der Bearbeitung (Fig. 6) ist der Formkörper 2 mit einer Höhe H' von 30 bis 50 mm bemessen.

Ebenso ist denkbar, die Kokosvlies-Lagen 3, 4 während des Ausstanzens unter Bildung eines hochverdichteten Formkörpers auch vollflächig zu pressen, wobei diese Preßwirkung bereits dadurch erreicht werden kann, daß das Mattenteil 12 aus einer die Höhe des Hohlraums 17 übersteigenden Vielzahl von ungepreßten Kokosvlies-Lagen besteht und diese im Hohlraum 17 so verpreßt werden, so daß der gebrauchsfertige Formkörper 2 eine noch dichtere Faserstruktur aufweist und damit die Verankerungsfestigkeit von Steckteilen im Formkörper 2, 2', 2'' erhöht ist.

## Patentansprüche

1. Tragteil für erdelose Pflanzkulturen, Gestecke oder dgl., bestehend aus einem durch Latex verbundene Kokosfasern aufweisenden Kokosvlies, **dadurch gekennzeichnet, daß** das Tragteil (1) als ein zumindest zwei Kokosvlies-Lagen (3, 4) aufweisender Formkörper (2; 2'; 2") mit einem konturbildenden Aussteifungsrand (5; 5') ausgebildet ist, in dessen Bereich die zumindest randseitig verdichteten Kokosvlies-Lagen (3, 4) mittels einer Haftstruktur fixiert sind.

2. Tragteil nach Anspruch 1, **dadurch gekennzeichnet, daß** der Formkörper (2; 2'; 2") aus zwei Kokosvlies-Lagen (3, 4) gebildet ist, die jeweils durch unterschiedliche Volumen- bzw. Gewichtsanteile von Latex und/oder Kokosfasern unterschiedliche Materialdichte aufweisen.

3. Tragteil nach Anspruch 1 oder 2, **dadurch gekennzeichnet, daß** die in Gebrauchsstellung des Formkörpers (2; 2'; 2") untere Kokosvlies-Lage (3) eine gegenüber der oder den oberen Kokosvlies-Lage(n) (4) höhere Materialdichte aufweist.

4. Tragteil nach einem der Ansprüche 1 bis 3, **dadurch gekennzeichnet, daß** dieses ausgehend vom Aussteifungsrand (5; 5') zumindest zur Formkörperoberseite (6) hin eine konvexe Querschnittsform (R) aufweist.

5. Tragteil nach einem der Ansprüche 1 bis 4, **dadurch gekennzeichnet, daß** zumindest die obere Kokosvlies-Lage (6) des Formkörpers (2; 2'; 2") zum Aussteifungsrand (5; 5') hin verspannt ist.

6. Tragteil nach einem der Ansprüche 1 bis 5, **dadurch gekennzeichnet, daß** dieses ausgehend vom Aussteifungsrand (5; 5') eine zur Oberseite (6) und zur Unterseite (7) des Formkörpers (2; 2'; 2") hin konvexe Oberflächenkontur (R, R') darbietet.

7. Verfahren zur Herstellung des Formkörpers nach einem der Ansprüche 1 bis 6, **dadurch gekennzeichnet, daß** zumindest zwei als Halbzeug vorgefertigte Kokosvlies-Lagen (3, 4) in Übereinanderlage verbracht, danach verpreßt und aus diesem zweilagigen Zwischenprodukt (12) der Formkörper (2; 2'; 2") ausgestanzt wird, wobei der Aussteifungsrand durch eine Haftstruktur aus verdichteten Latex- und Faserbestandteilen gebildet wird.

8. Verfahren nach Anspruch 7, **dadurch gekennzeichnet, daß** die in Übereinanderlage befindlichen Kokosvlies-Lagen (3, 4) gleichzeitig gepreßt und ausgestanzt werden.

9. Verfahren nach Anspruch 7 oder 8, **dadurch gekennzeichnet, daß** der Aussteifungsrand (5; 5') während des Ausstanzens im Bereich einer Trennfläche (15) des Kokosvlieses (12) eine Verklebung erfährt.

10. Verfahren nach einem der Ansprüche 7 bis 9, **dadurch gekennzeichnet, daß** die Kokosvlies-Lagen (3, 4) während des Ausstanzens unter Bildung eines verdichteten Formkörpers vollflächig gepreßt werden.

## Claims

1. Support element for soil-less plant cultures, floral arrangements or the like, consisting of a coconut fibre mat made of coconut fibres bonded with latex, **characterised in that** the support element (1) is formed as a shaped body (2; 2'; 2") containing at least two layers of coconut fibres (3, 4) with a contour-forming stiffening edge (5; 5) in the area of which at least the edge-compacted coconut fibre layers (3, 4) are fixed in position by an adhesive.

2. Support element in accordance with claim 1, **characterised in that** the shaped body (2; 2'; 2") is formed from two coconut fibre mat layers (3, 4) each of which exhibits different material densities resulting from different volume- or weight proportions of latex and/or coconut fibres.

3. Support element in accordance with claims 1 or 2, **characterised in that** the lower coconut fibre mat (3) of the shaped body (2; 2'; 2"), in the position of use, has a higher material density than the upper layer or layers (4) of coconut fibre mat.

4. Support element in accordance with one of claims 1 to 3, **characterised in that** starting from the stiffening edge (5; 5') to at least the upper side (6) of the shaped body, this exhibits a convex cross-sectional profile (R).

5. Support element in accordance with one of the claims 1 to 4, **characterised in that** at least the upper layer of coconut fibre mat (6) of the shaped body (2; 2'; 2") is placed under tension as far as the stiffening edge (5; 5').

6. Support element in accordance with one of the claims 1 to 5, **characterised in that** starting from the stiffening edge (5; 5') this exhibits a convex surface contour (R, R') to the upper side (6) and to the under side (7) of the shaped body (2; 2'; 2").

7. Procedure for the manufacture of the shaped body in accordance with one of claims 1 to 6, **characterised in that** at least two coconut fibre mats (3, 4) preprepared as a semifinished product are placed one above the other and then pressed together, after which the shaped body (2; 2'; 2") is stamped out of this double-layered intermediate product (12), whereby the stiffening edge is formed from an adhesive-bonded structure consisting of compacted latex- and fibre constituents.

8. Procedure in accordance with claim 7, **characterised in that** the superimposed coconut fibre mats (3, 4) are simultaneously pressed together and stamped out.

9. Procedure in accordance with claim 7 or 8, **characterised in that** during the stamping procedure the stiffening edge (5; 5') is subject to an adhesion effect in the area of an interface (15) of the coconut fibre mat (12).

10. Procedure in accordance with one of claims 7 to 9, **characterised in that** during the stamping operation the full surface area of the layers of coconut fibre mat (3, 4) is compressed to form a densified shaped body.

## Revendications

1. Pièce support pour cultures de plantes, compositions florales ou semblables sans terre constituée d'un voile de coco comportant des fibres de coco assemblées par du latex, **caractérisée en ce que** la pièce support (1) est conçue comme un corps façonné (2; 2'; 2'') comportant au moins deux couches de voile de coco (3,4), pourvu d'un bord de renfort (5; 5') formant un contour, dans la zone duquel les couches de voile de coco (3,4) comprimées au moins sur le bord sont fixées au moyen d'une structure adhésive.

2. Pièce support selon la revendication 1, **caractérisée en ce que** le corps façonné (2; 2' ; 2'') est constitué de deux couches de voile de coco (3,4) qui présentent respectivement une densité différente de matériau due à des proportions différentes en volume ou en poids de latex et/ou de fibres de coco.

3. Pièce support selon la revendication 1 ou 2, **caractérisée en ce que** la couche inférieure de voile de coco (3), en position d'utilisation du corps façonné (2; 2'; 2''), a une densité de matériau plus élevée que celle de la(les) couches(s) supérieure(s) de voile de coco (4).

4. Pièce support selon l'une des revendications 1 à 3, **caractérisée en ce que** celle-ci présente une forme convexe en coupe transversale (R) depuis le bord de renfort (5 ;5') au moins jusqu'à la face supérieure (R) du corps façonné (6).

5. Pièce support selon l'une quelconque des revendications 1 à 4, **caractérisée en ce qu'**au moins la couche supérieure de voile de coco (6) du corps façonné (2; 2'; 2") est fixée fermement au bord de renfort (5; 5')

6. Pièce support selon l'une quelconque des revendications 1 à 5, **caractérisée en ce que** celle-ci présente un contour de surface convexe (R; R') depuis le bord de renfort (5; 5') jusqu'à la face supérieure (6) et jusqu'à la face inférieure (7) du corps façonné (2; 2'; 2'').

7. Procédé de fabrication d'un corps façonné selon l'une quelconque des revendications 1 à 6, **caractérisé en ce qu'**au moins deux couches de voile de coco (3,4) préfabriquées en tant que produit semi-fini sont superposées l'une sur l'autre, sont ensuite comprimées et le corps façonné (2; 2'; 2'') est estampé à partir de ce produit intermédiaire à deux couches (12), le bord de renfort étant formé par une structure adhésive constituée par des éléments comprimés de latex et de fibres.

8. Procédé selon la revendication 7, **caractérisé en ce que** les couches de voile de coco (3,4) superposées l'une sur l'autre sont simultanément pressées et estampées.

9. Procédé selon la revendication 7 ou 8 **caractérisé en ce que** le bord de renfort (5; 5') subit un collage pendant l'estampage dans la zone d'une surface de séparation (15) du voile de coco (12).

10. Procédé selon l'une quelconque des revendications 7 à 9 **caractérisé en ce que** les couches de voile de coco (3,4) sont pressées sur toute la surface pendant l'estampage en formant un corps façonné comprimé.
